# EUROPEAN PATENT APPLICATION

(11) **EP 2 653 948 A2**
(43) Date of publication of application: **23.10.2013**
(21) Application number: 13164542.6
(22) Date of filing: 19.04.2013
(51) Int. Cl.: G06F 1/16, G06F 3/0362

(54) **Method and apparatus for providing multi function in electronic device**

(30) Priority: 19.04.2012 KR 20120040899
(71) Applicant: Samsung Electronics Co., Ltd, Gyeonggi-do 443-742 (KR)
(72) Inventor: Kim, Jong-Seok, Gyeonggi-do (KR)
(74) Representative: Nederlandsch Octrooibureau

(57) **Abstract**

A method and apparatus provide a multi function in an electronic device. The method includes designating a plurality of functions to a corresponding button or touch event, identifying the deformation or non-deformation of the electronic device, when the electronic device is deformed and button pressing or touch event occurs, executing a first function, and, when the electronic device is not deformed and the button pressing or touch event occurs, executing a second function.

## Description

### TECHNICAL FIELD OF THE INVENTION

The present disclosure relates to a method and apparatus for providing a multi function in an electronic device.

### BACKGROUND OF THE INVENTION

Due to the growth of the electronic communication industry, an electronic device such as a mobile communication terminal (i.e., a cellular phone), an electronic scheduler, a personal complex terminal and the like is becoming a necessity to modern society while becoming a significant means of delivery of rapidly changing information.

Further, in recent years, there is a tendency to apply a flexible display to the electronic device. The flexible display can be folded or bent. The flexible display is expected to pioneer the conventional restrictive display field.

The electronic device with the flexible display has a button and, when the button is pressed, the electronic device performs a function previously assigned to the button. Generally, the function previously assigned to the button does not have considered the deformation of the electronic device with the flexible display (hereinafter, referred to as the 'flexible display electronic device'). In result, although users have a fascination about the deformation of the flexible display electronic device, they may not be satisfied with the function assigned to the button of the flexible display electronic device in circumstances in which the flexible display electronic device is deformed. Accordingly, there is a need for new researches on the button taking the deformation of the flexible display electronic device into consideration.

### SUMMARY OF THE INVENTION

To address the above-discussed deficiencies of the prior art, it is a primary object to provide a multi-function provision method and apparatus of an electronic device for assigning a plurality of functions to a button or a touch event.

Another aspect of the present disclosure is to provide a multi-function provision method and apparatus of an electronic device for varying a function, which is executed when button pressing and touch event occurs, depending on the deformation of the electronic device, e.g., extension, shrinkage, warping, folding, twisting, bending and the like of the electronic device.

A further aspect of the present disclosure is to provide a multi-function provision method and apparatus of an electronic device for designating a plurality of functions to a button or a touch event and selecting a function, which will be executed when button pressing and touch event occurs, depending on deformation or non-deformation of an electronic device and deformation information thereof (e.g., a deformation type and a deformation degree).

The above aspects are achieved by providing a method and apparatus for providing a multi function in an electronic device.

According to one aspect of the present disclosure, a method for providing a multi function in an electronic device is provided. The method includes designating a plurality of functions to a button or a touch event or a non-contact input event, identifying the deformation or non-deformation of the electronic device, when the electronic device is deformed and pressing of the button or the touch event or the non-contact input event occurs, executing a first function, and, when the electronic device is not deformed and pressing of the button or the touch event or the non-contact input event occurs, executing a second function.

According to another aspect of the present disclosure, an apparatus for providing a multi function in an electronic device is provided. The apparatus includes at least one or more processors for executing computer programs, a memory for storing data and instructions, a sensor for providing deformation information of the electronic device to the at least one or more processors, and at least one or more modules stored in the memory and configured to be executed by the one or more processors. The module designates a plurality of functions to a button or a touch event or a non-contact input event, identifies the deformation or non-deformation of the electronic device from the deformation information, executes a first function when the electronic device is deformed and pressing of the button or the touch event or the non-contact input event occurs, and executes a second function when the electronic device is not deformed and pressing of the button or touch event or the non-contact input event occurs.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 illustrates a block diagram of an electronic device according to an exemplary embodiment of the present disclosure;

FIGS. 2A and 2B illustrates a flowchart of a process of providing a multi function in an electronic device according to an exemplary embodiment of the present disclosure;

FIG. 3 illustrates a flowchart of a process from step 205 of FIG. 2A of applying a corresponding function when an electronic device is deformed and button pressing or touch event occurs according to an exemplary embodiment of the present disclosure;

FIGS. 4A to 4C illustrate an operation of a user interface of an electronic device providing a multi function according to an exemplary embodiment of the present disclosure;

FIGS. 5A and 5B illustrate an operation of a user interface of an electronic device providing a multi function according to another exemplary embodiment of the present disclosure; and

FIGS. 6A and 6B illustrate an operation of a user interface of an electronic device providing a multi function according to a further exemplary embodiment of the present disclosure.

### DETAILED DESCRIPTION OF THE INVENTION

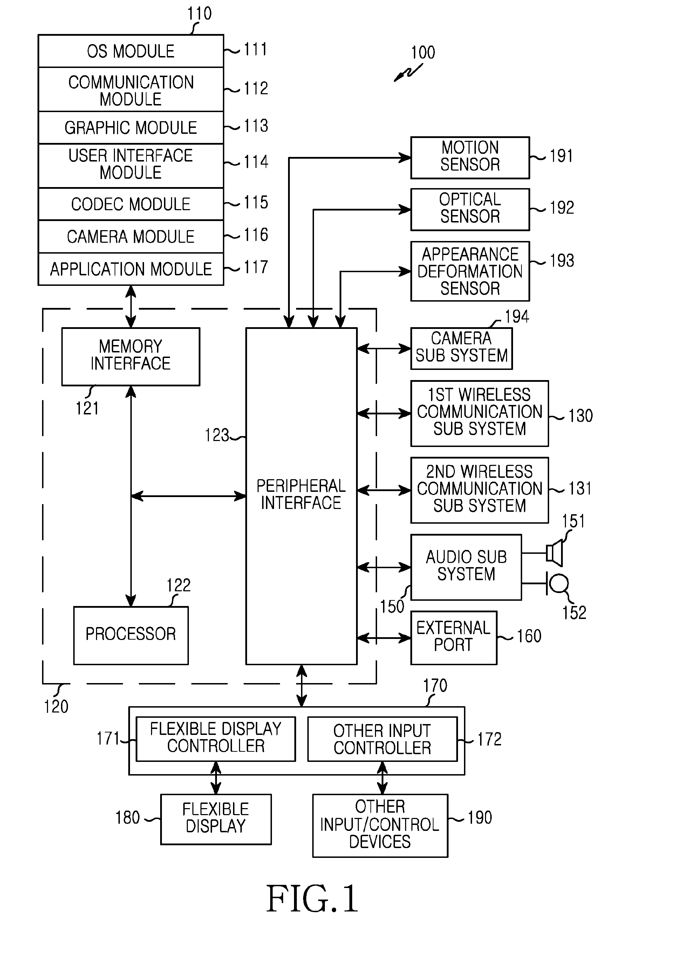

FIGURES 1 through 6B, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device. Preferred embodiments of the present disclosure will be described herein below with reference to the accompanying drawings. In the following description, well-known functions or constructions are not described in detail since they would obscure the invention in unnecessary detail. And, terms described below, which are defined considering functions in the present invention, can be different depending on user and operator's intention or practice. Therefore, the terms should be defined on the basis of the disclosure throughout this specification.

An electronic device according to an exemplary embodiment of the present disclosure is deformable. For example, the electronic device can be subjected to deformation such as extension, shrinkage, warping, folding, twisting, bending, unbending and the like. The electronic device can have a flexible display suitable to this deformation, and the flexible display can employ a touch recognition technology. Particularly, the exemplary embodiment of the present disclosure assigns a plurality of functions to a button or a touch event, and selects a function assigned to the button or touch event depending on deformation or non-deformation of the electronic device, a deformation type thereof, and a deformation degree thereof.

FIG. 1 illustrates a block diagram of an electronic device according to an exemplary embodiment of the present disclosure. The electronic device 100 can be a portable electronic device or can be a device such as a portable terminal, a mobile phone, a mobile pad, a media player, a tablet computer, a handheld computer, or a Personal Digital Assistant (PDA). Also, the electronic device 100 may be an arbitrary electronic device including a device having a combination of two or more functions among these devices.

The electronic device 100 includes a memory 110, a processor unit 120, a first wireless communication sub system 130, a second wireless communication sub system 131, an audio sub system 150, a speaker 151, a microphone 152, an external port 160, an Input/Output (I/O) sub system 170, a flexible display 180, and other input or control devices 190. The memory 110 and the external port 160 can be constructed in plural.

The processor unit 120 can include a memory interface 121, one or more processors 122, and a peripheral interface 123. The whole processor unit 120 is also called a processor. The memory interface 121, the one or more processors 122, and/or the peripheral interface 123 can be separate constituent elements or can be integrated into one or more integrated circuits.

The processor 122 executes various software programs and performs various functions for the electronic device 100, and also performs processing and control for voice communication, video communication, and data communication. Also, in addition to this general function, the processor 122 executes a software module (i.e., an instruction set) stored in the memory 110 and performs various functions corresponding to the software module. Also, in addition to this general function, the processor 122 plays even a role of executing a specific software module (i.e., an instruction set) stored in the memory 110 and performing specific various functions corresponding to the software module. That is, the processor 122 carries out a method of an exemplary embodiment of the present disclosure in conjunction with the software modules stored in the memory 110.

The processor 122 can include one or more data processors, image processors, or COder/DECoders (CODECs). The electronic device 100 may construct separately the data processor, the image processor, or the CODEC. The peripheral interface 123 connects the I/O sub system 170 of the electronic device 100 and various peripheral devices thereof to the processor 122. Further, the peripheral interface 123 connects the I/O sub system 170 of the electronic device 100 and the various peripheral devices thereof to the memory 110 through the memory interface 121.

Various constituent elements of the electronic device 100 can be connected with one another by one or more communication buses (not denoted by reference numerals) or stream lines (not denoted by reference numerals).

The external port 160 direct connects the electronic device 100 to other electronic devices or indirect connects the electronic device 100 to other electronic devices through a network (for example, the Internet, an intranet, a wireless Local Area Network (LAN) and the like). For example, the external port 160 refers to a Universal Serial Bus (USB) port, a FIREWIRE port or the like, although not limited to these.

A motion sensor 191, an optical sensor 192, and an appearance deformation sensor 193 are connected to the peripheral interface 123 and enable various functions. For instance, the motion sensor 191 and the optical sensor 192 can be connected to the peripheral interface 123, and sense a motion of the electronic device 100 and sense a light from the exterior, respectively.

Particularly, the appearance deformation sensor 193 can sense the deformation of the electronic device 100, for example, any one deformation among extension, shrinkage, warping, folding, twisting, bending, and unbending. These deformations correspond to the deformation of the flexible display 180. For example, the appearance deformation sensor 193 can sense the deformation of a screen of the flexible display 800, for example, any one deformation among extension, shrinkage, warping, folding, twisting, bending and unbending. Further, the appearance deformation sensor 193 can measure a degree of deformation such as warping, folding, twisting, bending, and unbending. For instance, when the screen of the flexible display 180 is warped round, the appearance deformation sensor 193 can calculate a slope of the tangent line for each coordinate of the round-warped screen. According to the slope of the tangent line of each coordinate of the round-warped screen, the processor 122 controls the flexible display controller 171, and the flexible display controller 171 controls video output of the flexible display 180. Besides this, other sensors such as a position sensor, a temperature sensor, a biological sensor and the like can be connected to the peripheral interface 123 and perform related functions.

A camera sub system 194 can perform a camera function such as photograph and video clip recording and the like. The optical sensor 192 can be a Charged Coupled Device (CCD) device or Complementary Metal-Oxide Semiconductor (CMOS) device for the camera sub system 194.

The first and second wireless communication sub systems 130 and 131 enable communication. The first and second wireless communication sub systems 130 and 131 can include a radio frequency receiver and transceiver and/or an optical (e.g., infrared) receiver and transceiver. The first and second communication sub systems 130 and 131 can be distinguished according to a communication network. For example, the first and second wireless communication sub systems 130 and 131 can be designed to operate through one of a Global System for Mobile Communication (GSM) network, an Enhanced Data GSM Environment (EDGE) network, a Code Division Multiple Access (CDMA) network, a Wireless-Code Division Multiple Access (W-CDMA) network, a Long Term Evolution (LTE) network, an Orthogonal Frequency Division Multiple Access (OFDMA) network, a Wireless Fidelity (Wi-Fi) network, a Wireless interoperability for Microwave Access (WiMAX) network or/and a Bluetooth network.

The audio sub system 150 is connected to the speaker 151 and the microphone 152, and takes charge of input and output of an audio such as voice recognition, voice copy, digital recording, and call function. That is, the audio sub system 150 communicates with a user through the speaker 151 and the microphone 152. The audio sub system 150 receives a data signal through the peripheral interface 123 of the processor unit 120, converts the received data signal into an electric signal, and provides the converted electric signal to the speaker 151. The speaker 151 converts the electric signal into a sound wave audible by a person and outputs the converted sound wave. The microphone 152 converts a sound wave forwarded from the person or other sound sources into an electric signal. The audio sub system 150 receives an electric signal from the microphone 152, converts the received electric signal into an audio data signal, and transmits the converted audio data signal to the peripheral interface 123. The audio sub system 150 can include a detachable earphone, headphone or headset.

The I/O sub system 170 includes a flexible display controller 171 and/or other input controller 172. The flexible display 180 is subjected to at least one or more deformations among extension, shrinkage, warping, folding, twisting, bending, and unbending. The flexible display controller 171 is connected to the flexible display 180 and controls video output according to the deformation of the flexible display 180. The flexible display 180 and the flexible display controller 171 can further apply not only capacitive, resistive, infrared and surface acoustic wave technologies but also an arbitrary multi-touch sensing technology including other proximity sensor arrays or other elements. The other input controller 172 can be coupled to the other input/control devices 190. The other input/control devices 190 can construct up/down buttons for volume adjustment. Besides this, the other input/control devices 190 can construct at least one or more of a push button providing a corresponding function, a rocker button, a rocker switch, a thumb-wheel, a dial, a stick, and a pointer device such as a stylus and the like.

The flexible display 180 provides an input and output interface between the electronic device 100 and a user. For example, the flexible display 180 employs a touch sensing technology, and forwards a user's touch input to the electronic device 100 and displays visual information (e.g., a text, a graphic, a video and the like) from the electronic device 100 for the user.

The memory 110 is connected to the memory interface 121. The memory 110 includes one or more high-speed random access memories and/or non-volatile memories such as magnetic disk storage devices, one or more optical storage devices and/or flash memories (for example, a Not AND (NAND) memory, a Not OR (NOR) memory).

The memory 110 stores software. The software includes an Operating System (OS) module 111, a communication module 112, a graphic module 113, a user interface module 114, a CODEC module 115, a camera module 116, one or more application modules 117 and the like. The term 'module' is also expressed as a set of instructions or an instruction set or a program.

The OS software 111 represents a built-in operating system such as WINDOWS, LINUX, Darwin, RTXC, UNIX, OS X, or VxWorks, and includes various software constituent elements controlling general system operation. Control of the general system operation includes memory management and control, storage hardware (device) control and management, power control and management and the like. Further, the OS software 111 performs even a function of making smooth communication between various hardware (devices) and software constituent elements (modules).

The communication module 112 can enable communication with the counterpart electronic device such as a personal computer, a server, a portable terminal and the like, through the first and second wireless communication sub systems 130 and 131 or the external port 160.

The graphic module 113 includes various software constituent elements for providing and displaying a graphic on the flexible display 180. The term 'graphic' includes a text, a web page, an icon, a digital image, a video, an animation and the like.

The user interface module 114 includes various software constituent elements associated with a user interface. Further, the user interface module 114 includes information about how a state of the user interface is changed and in which conditions the change of the state of the user interface is carried out, and the like.

The CODEC module 115 includes a software constituent element related to encoding and decoding of a video file.

The camera module 116 includes a camera related software constituent element enabling camera-related processes and functions.

The application module 117 includes a browser, an electronic mail (e-mail), an instant message, word processing, keyboard emulation, an address book, a touch list, a widget, Digital Right Management (DRM), voice recognition, voice copy, a location determining function, a location-based service and the like. The memory 110 can include additional modules (i.e., instructions) besides the above-mentioned modules.

Also, various functions of the electronic device 100 according to the present disclosure can be executed by hardware including one or more stream processing and/or Application Specific Integrated Circuits (ASICs), and/or software, and/or a combination of them.

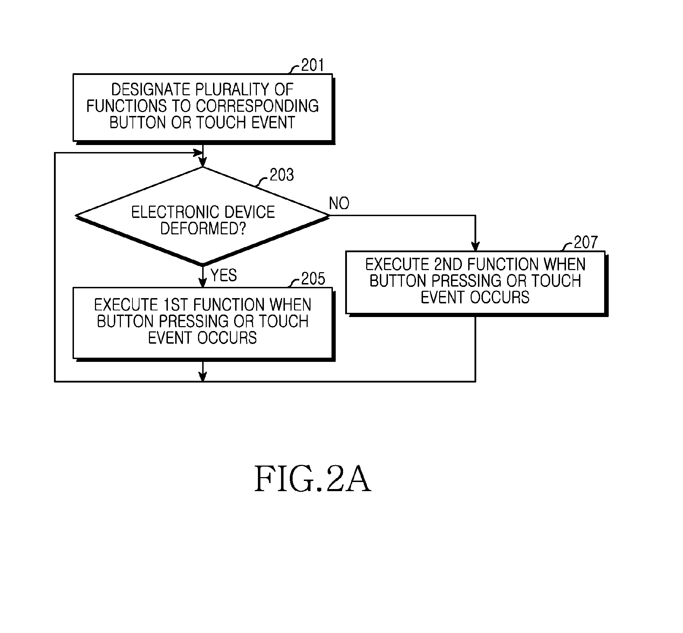

FIG. 2A illustrates a flowchart of a process for providing a multi-function in an electronic device according to an exemplary embodiment of the present disclosure. The appearance deformation sensor 193 provides deformation information of the electronic device 100 to the at least one or more processors 122. The processor 122 executes at least one or more modules stored in the memory 110.

Referring to FIG. 2A, in step 201, the processor 122 designates a plurality of functions to a corresponding button or a touch event. The button can be a software button realized in a touch screen or a hardware button realized in a housing forming an appearance of the electronic device 100. The touch event can be distinguished on a basis of a touch type. For instance, the touch event can include a single tap, a multi tap, a drag, flicking and the like. The processor 122 may permit a user to assign a plurality of functions to the button or touch event.

Next, in step 203, the processor 122 identifies the deformation or non-deformation of the electronic device 100. The appearance deformation sensor 193 acquires deformation information of the electronic device 100 and provides the acquired deformation information to the processor 122. The deformation information includes a type of deformation such as extension, shrinkage, warping, folding, twisting, bending, unbending and the like, and a degree of this deformation.

When it is identified in step 203 that the electronic device 100 is deformed and button pressing or touch event occurs, in step 205, the processor 122 applies a first function.

In contrast, when it is identified in step 203 that the electronic device 100 is not deformed and the button pressing or touch event occurs, in step 207, the processor 122 applies a second function.

As a result, an exemplary embodiment of the present disclosure varies a function applied to a specific button or a touch event depending on the deformation or non-deformation of the electronic device 100, e.g., the deformation or non-deformation of the flexible display 180. For instance, the first function is a video-related function and the second function is an audio-related function, or vice versa.

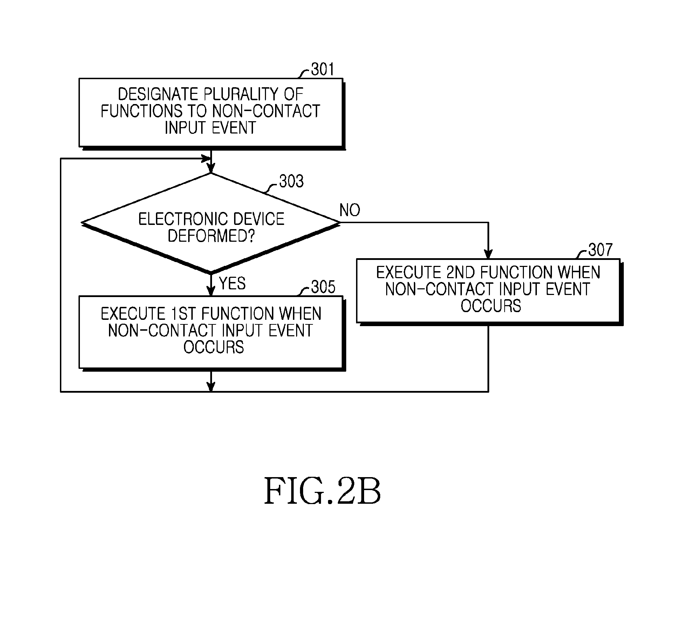

FIG. 2B illustrates a flowchart of a process for providing a multi-function in an electronic device according to an exemplary embodiment of the present disclosure. The appearance deformation sensor 193 provides deformation information of the electronic device 100 to the at least one or more processors 122. The processor 122 executes at least one or more modules stored in the memory 110. The touch screen can simultaneously support data input and output functions, and may sense a proximity touch. The proximity touch includes both a contact touch and a non-contact touch, such as a hovering, etc., on the touch screen.

Referring to FIG. 2B, in step 301, the processor 122 designates a plurality of functions to a corresponding non-contact input event. The non-contact input event (or non-touch event) may be an event which is detected as a touch to a touch screen or other-sensitive devices but which does not have any actual physical contact. For instance, the sensitive devices for sensing a non-contact touch includes a proximity sensor, a image sensor, a optical sensor.

The non-contact input event may include a proximity recognition method known in the art implemented, and may includes sensing various proximity gestures, e.g., a palm recognition, a finger swiper, etc. The non-contact input event is not limited to simple proximity sensing.

Next, in step 303, the processor 122 identifies the deformation or non-deformation of the electronic device 100. The appearance deformation sensor 193 acquires deformation information of the electronic device 100 and provides the acquired deformation information to the processor 122. The deformation information includes a type of deformation such as extension, shrinkage, warping, folding, twisting, bending, unbending and the like, and a degree of this deformation.

When it is identified in step 303 that the electronic device 100 is deformed and the non-contact input event occurs, in step 305, the processor 122 applies a first function.

In contrast, when it is identified in step 203 that the electronic device 100 is not deformed and the non-contact input event occurs, in step 307, the processor 122 applies a second function.
As a result, an exemplary embodiment of the present disclosure varies a function applied to a specific non-contact input event depending on the deformation or non-deformation of the electronic device 100, e.g., the deformation or non-deformation of the flexible display 180.

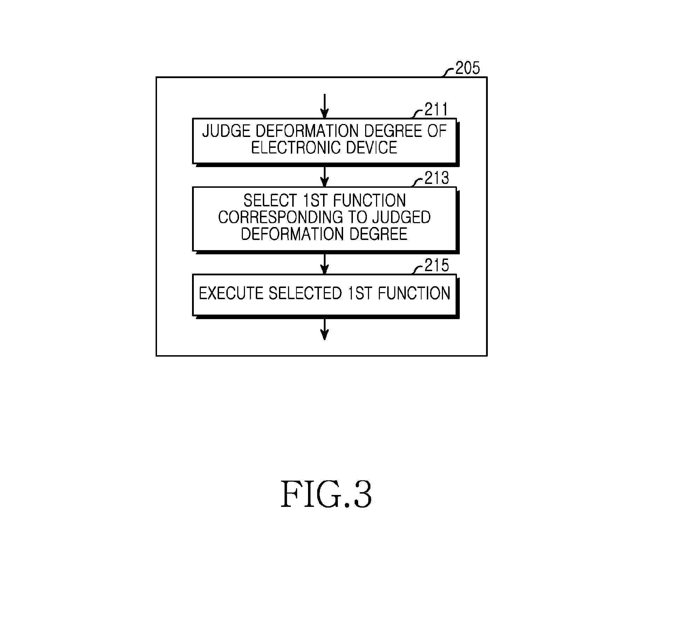

FIG. 3 illustrates a flowchart of a process from step 205 of FIG. 2A of applying a corresponding function when an electronic device is deformed and button pressing or touch event occurs according to an exemplary embodiment of the present disclosure. A process of step 305 of FIG. 2B is applying in the same manner.

Referring to FIG. 3, in step 211, the processor 122 judges a deformation degree of the electronic device 100. As aforementioned, the appearance deformation sensor 193 provides deformation information of the electronic device 100 to the processor 122. For example, the deformation degree can include a extension degree, a shrinkage degree, a warping degree, a folding degree, a twisting degree, a bending degree, an unbending degree and the like.

Next, in step 213, the processor 122 selects the first function corresponding to the judged deformation degree.

After that, in step 215, the processor 122 executes the selected first function.

As a result, the exemplary embodiment of the present disclosure executes various functions depending on the deformation degree of the electronic device 100, when the button pressing or touch event occurs.

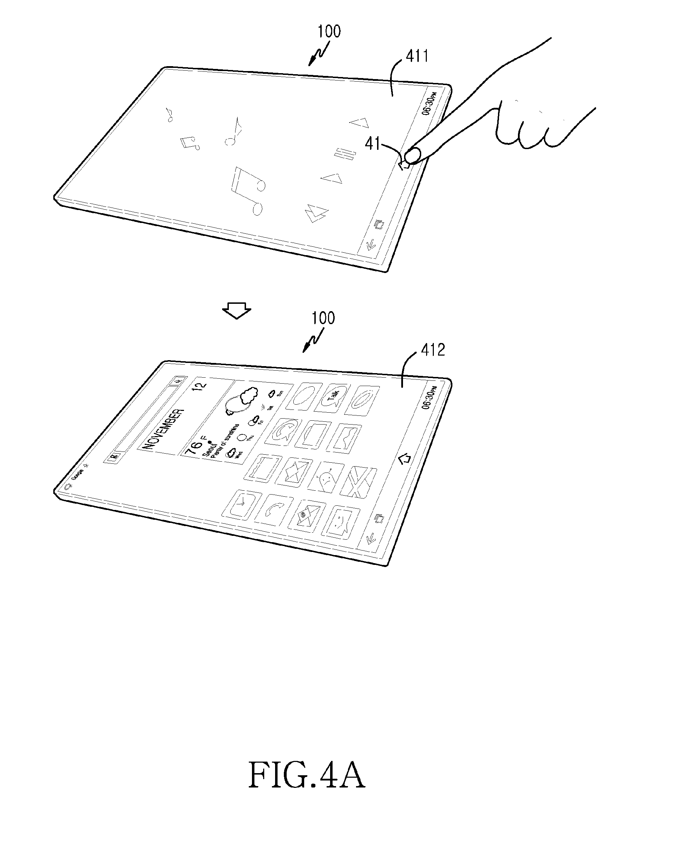

FIGS. 4A to 4C illustrate an operation of a user interface of an electronic device providing a multi function according to an exemplary embodiment of the present disclosure.

Referring to FIG. 4A, the electronic device 100 provides a home screen 412. The home screen 412 indicates an initial user interface screen including an application shortcut (e.g., an icon), a widget, a notification status bar and the like. Further, the electronic device 100 provides a software button, which is called a home button 41, to a touch screen. When the electronic device 100 is not deformed, the home button 41 is assigned a function of returning to the home screen 412. For instance, when a user presses the home button 41, the electronic device 100 converts to the home screen 412 from a user interface screen 411 of a music play application.

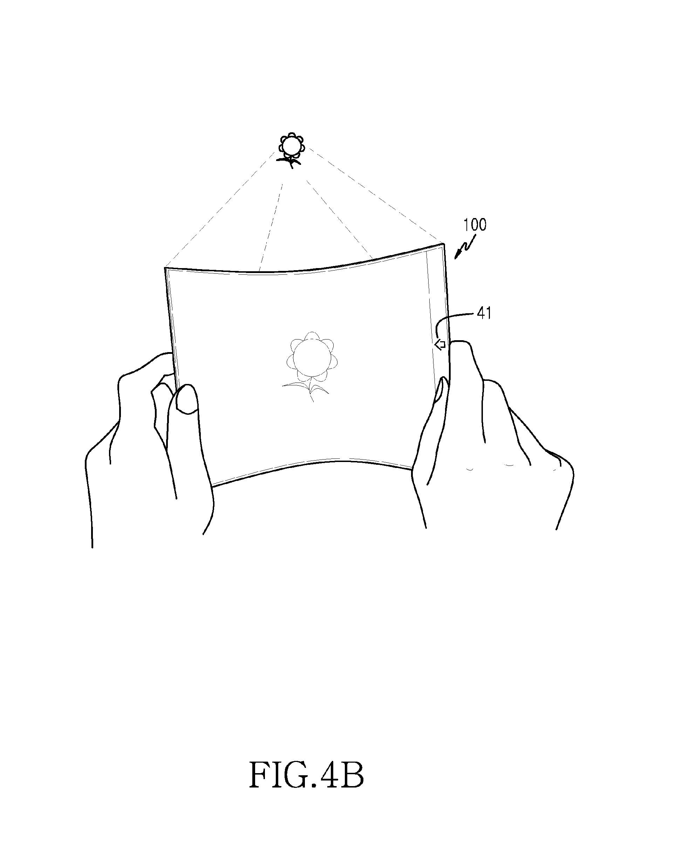

Referring to FIG. 4B, when the electronic device 100 is deformed, the deformed electronic device 100 applies a camera capture function to the home button 41. For instance, when the user presses the home button 41, the deformed electronic device 100 takes a photo.

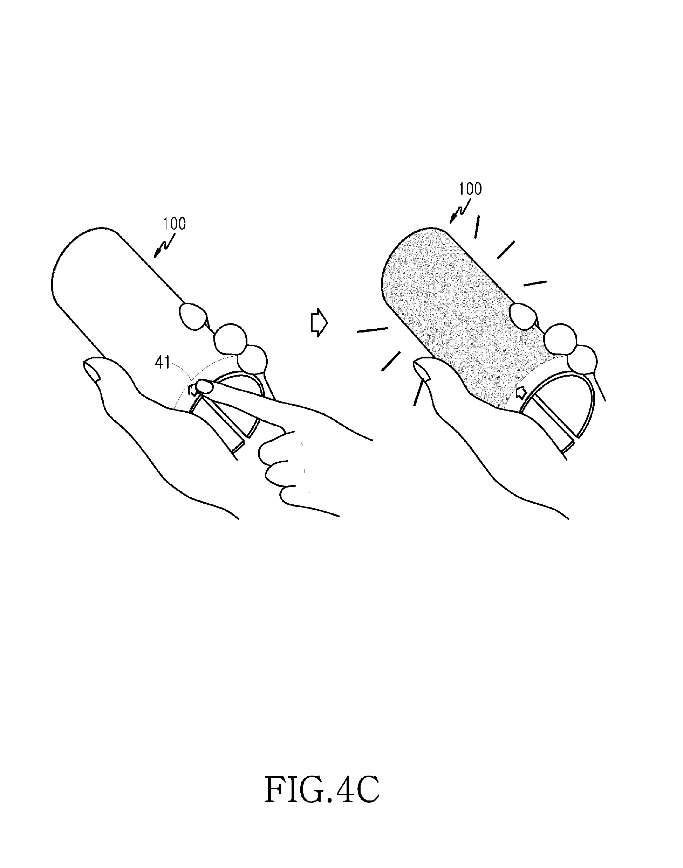

Referring to FIG. 4C, when the electronic device 100 is deformed, the deformed electronic device 100 applies a screen flickering function to the home button 41, and realizes a screen by a warning light.

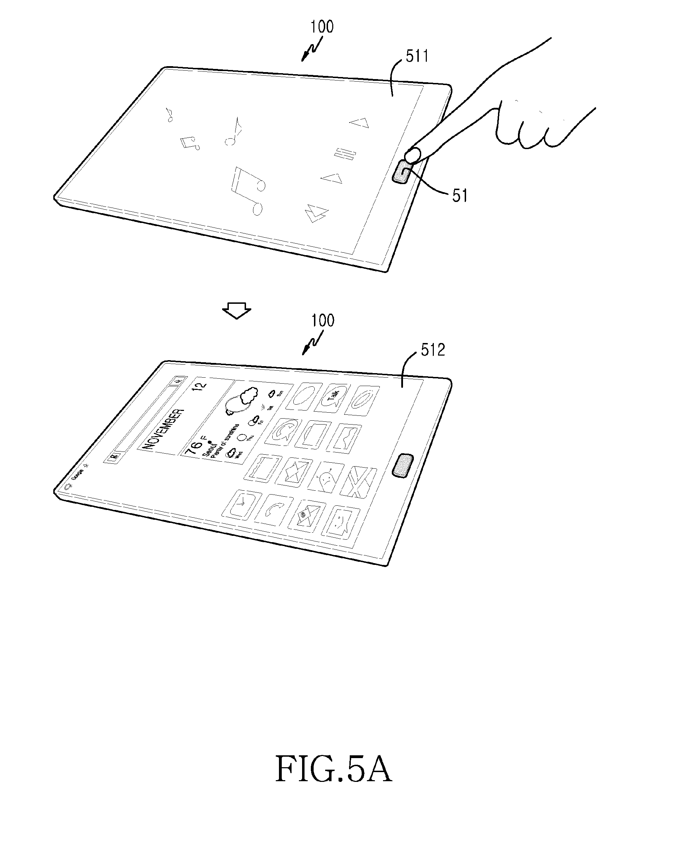

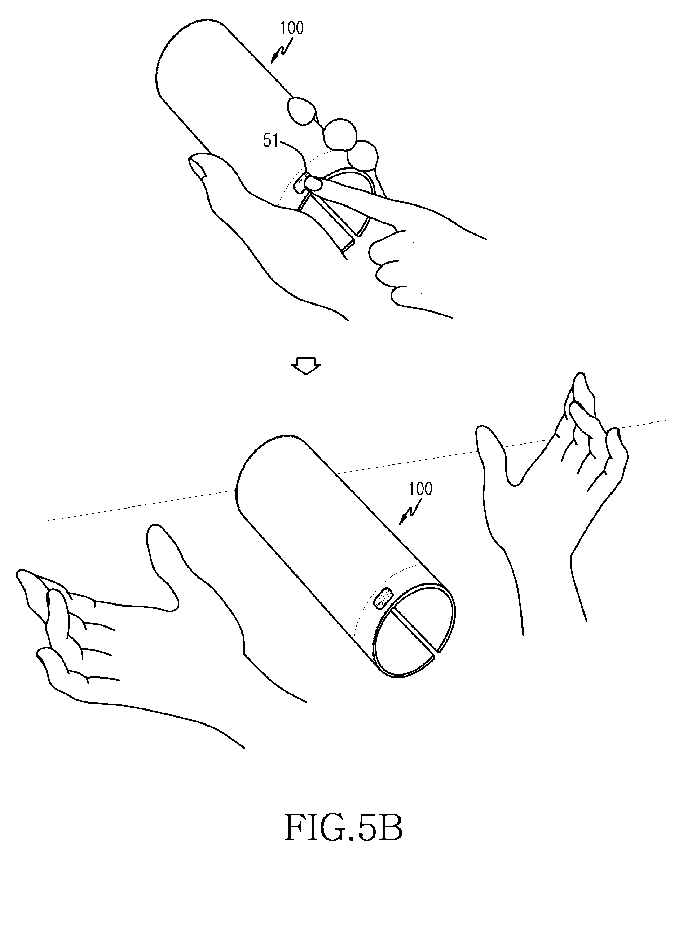

FIGS. 5A and 5B illustrate an operation of a user interface of an electronic device providing a multi function according to another exemplary embodiment of the present disclosure.

Referring to FIG. 5A, the electronic device 100 provides a home screen 512. The home screen 512 indicates an initial user interface screen including an application shortcut (e.g., an icon), a widget, a notification status bar and the like. Further, the electronic device 100 provides a hardware button, which is called a home button 51 constructed in a housing forming an appearance. When the electronic device 100 is not deformed, the home button 51 is assigned a function of returning to the home screen 512. For instance, when a user presses the home button 51, the electronic device 100 converts to the home screen 512 from a user interface screen 511 of a music play application.

Referring to FIG. 5B, when the electronic device 100 is deformed, the electronic device 100 applies a function of maintaining the deformation of the electronic device 100 to the home button 51. For instance, if being subjected to an external force from the user, the electronic device 100 is deformed and, if the external force is removed, the electronic device 100 returns to the original form. Further, the electronic device 100 can construct a software and hardware means capable of maintaining a deformed posture, and the operation or non-operation of the software and hardware means can be assigned to the home button 51.

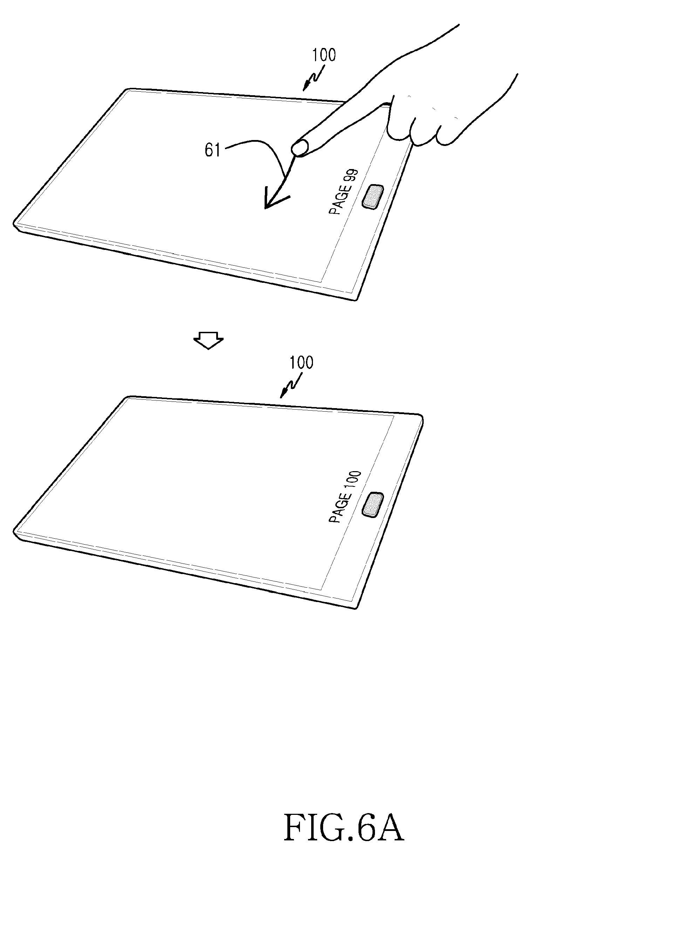

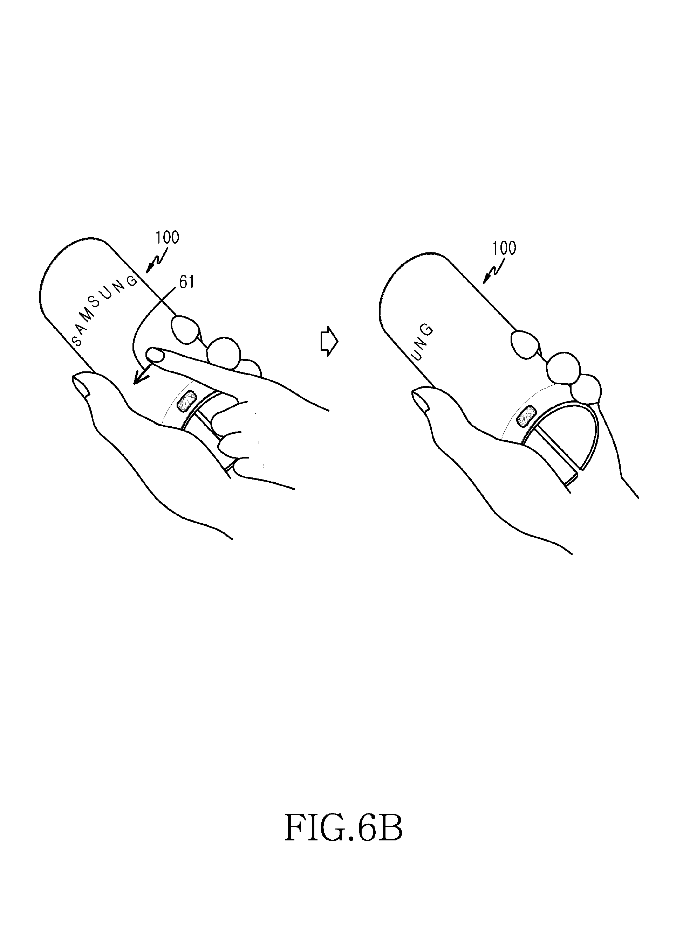

FIGS. 6A and 6B illustrate an operation of a user interface of an electronic device providing a multi function according to a further exemplary embodiment of the present disclosure.

Referring to FIG. 6A, when the electronic device 100 is not deformed, the electronic device 100 applies a page turn-over function to touch flicking, i.e., a touch event of touch-out after touch-and-drag. For example, if a user performs touch flicking from the right to the left as denoted by reference numeral 61, the electronic device 100 turns over to the next page. Further, if the user performs the touch flicking from the left to the right, the electronic device 100 turns over to the previous page.

Referring to FIG. 6B, when the electronic device 100 is deformed in a round-rolled form, the electronic device 100 applies a function of repeatedly moving screen contents, to touch flicking. For instance, if the user performs touch flicking from the right to the left as denoted by reference numeral 61 on a round-rolled touch screen of the electronic device 100, the deformed electronic device 100 repeatedly moves a wording 'SAMSUNG' of the touch screen from the right to the left. Further, a movement speed of the wording 'SAMSUNG' can be varied depending on a round-rolling degree of the electronic device 100.

In conclusion, a method and apparatus for providing a multi function in an electronic device according to an exemplary embodiment of the present disclosure vary a function applied to a previously configured button and touch event depending on the deformation of the electronic device, so a user can experience a fascinating function suitable to the deformation of the electronic device.

In case of implementation in the form of software configured hardware, a computer readable storage medium storing one or more programs (software modules) may be provided. The one or more programs stored in the computer readable storage medium are configured for execution by one or more processors inside the electronic device. The one or more programs include instructions for allowing the electronic device to execute methods according to the embodiments described in claims and/or specification of the present invention.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be loaded into hardware such as a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, an artisan understands and appreciates that under the broadest reasonable interpretation, a "processor" or "microprocessor" as well as "unit" constitute statutory subject matter comprising hardware in compliance with 35 U.S.C. §101.

These programs (software modules, software) may be stored in a random access memory, a non-volatile memory including a flash memory, Read Only Memory (ROM), an Electrically Erasable Programmable Read Only Memory (EEPROM), a magnetic disc storage device, a Compact Disc (CD)-ROM, Digital Versatile Discs (DVDs) or other types of optical storage devices, and a magnetic cassette. Alternatively, these programs may be stored in a memory configured in a combination of some or all of these. Also, a plurality of respective memories may be provided.

Also, these programs may be stored in an attachable storage device that can access the electronic device via a communication network such as the Internet, Intranet, Local Area Network (LAN), Wide LAN (WLAN), and a Storage Area Network (SAN), or a communication network configured in combination of these. This storage device may access the electronic device via an external port.

Also, a separate storage device on a communication network may access a portable electronic device.

It is also within the spirit and scope of the claimed invention that a camera subsystem recording images of the object may be a separate entity from the process unit, and could, for example, communicate with the processing unit via wireless communication, or IP, etc. While the examples have used an electronic device that is typically portable, the invention is broad and the processing unit could be part of a security server and a portable electronic device with a camera module is attempting to purchase or access something requiring identification of the person seeking purchase or access.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method for providing multiple functions in an electronic device, the method comprising:
designating a plurality of functions to a button or a touch event or a non-contact input event;
identifying a deformation or a non-deformation of the electronic device;
when the electronic device is deformed and pressing of the button or the touch event or the non-contact input event occurs, executing a first function; and
when the electronic device is not deformed and pressing of the button or the touch event or the non-contact input event occurs, executing a second function.

2. The method of claim 1, wherein executing the first function when the electronic device is deformed and pressing of the button or the touch event or the non-contact input event occurs comprises:
judging a deformation degree of the electronic device;
selecting the first function corresponding to the judged deformation degree; and
executing the selected first function.

3. The method of claim 1, wherein identifying the deformation or the non-deformation of the electronic device comprises sensing at least one of an extension of the electronic device, shrinkage, warping, folding, twisting, bending, or unbending.

4. The method of claim 1, wherein identifying the deformation or the non-deformation of the electronic device comprises identifying the deformation of a flexible display, or
wherein identifying the deformation or the non-deformation of the electronic device comprises identifying the deformation of a touch screen.

5. The method of claim 1, wherein the button is a software button or a hardware button, and
wherein the touch event is at least one of a single tap, a multi tap, a drag, or a flicking.

6. The method of claim 1, wherein the first function is a video-related function and the second function is an audio-related function, or
wherein the first function is an audio-related function and the second function is a video-related function.

7. The method of claim 1, wherein the non-contact input event includes a proximity touch.

8. An apparatus for providing multiple functions in an electronic device, the apparatus comprising:
at least one or more processors configured to execute computer programs;
a memory configured to store data and instructions;
a sensor configured to provide deformation information of the electronic device to the at least one or more processors; and
wherein one or more of the processors are configured to execute instructions of one or more modules stored in the memory to:
designate a plurality of functions to a button or a touch event or a non-contact input event,
identify a deformation or a non-deformation of the electronic device from the deformation information,
execute a first function when the electronic device is deformed and pressing of the button or the touch event or the non-contact input event occurs, and
execute a second function when the electronic device is not deformed and the button pressing or the touch event occurs.

9. The apparatus of claim 8, wherein, in executing the first function when the electronic device is deformed and pressing of the button or the touch event or the non-contact input event occurs, the one or more processors are configured to execute the instructions to judge a deformation degree of the electronic device, select the first function corresponding to the judged deformation degree, and execute the selected first function.

10. The apparatus of claim 8, wherein, when identifying the deformation or the non-deformation of the electronic device from the deformation information, the sensor is configured to sense at least one of an extension of the electronic device, shrinkage, warping, folding, twisting, bending, or unbending.

11. The apparatus of claim 8, further comprising a deformable flexible display,
wherein, when identifying the deformation or non-deformation of the electronic device from the deformation information, the module identifies the deformation of the flexible display.

12. The apparatus of claim 8, further comprising:
a deformable touch screen,
wherein, when identifying the deformation or non-deformation of the electronic device from the deformation information, the one or more processors are further configured to identify the deformation of the touch screen from the deformation information.

13. The apparatus of claim 8, wherein the button is a software button or a hardware button, and
wherein the touch event is at least one of a single tap, a multi tap, a drag, or a flicking.

14. The apparatus of claim 8, wherein the non-contact input event includes a proximity touch.

15. The apparatus of claim 8, wherein the first function is a video-related function, and the second function is an audio-related function, or
wherein the first function is an audio-related function, and the second function is a video-related function.
